# EUROPEAN PATENT SPECIFICATION

(11) **EP 2 377 369 B1**
(45) Date of publication and mention of the grant of the patent: **30.10.2013**
(21) Application number: 09774753.9
(22) Date of filing: 03.12.2009
(51) Int. Cl.: H05B 33/08

(54) **LED LIGHT SOURCE AND LAMP COMPRISING SUCH A LED LIGHT SOURCE**
LED-LICHTQUELLE UND LAMPE MIT EINER SOLCHEN LED-LICHTQUELLE
SOURCE DE LUMIÈRE À DEL ET LAMPE COMPRENANT UNE TELLE SOURCE DE LUMIÈRE À DEL

(30) Priority: 12.12.2008 EP 08171555
(43) Date of publication of application: 19.10.2011
(73) Proprietor: Koninklijke Philips N.V., 5656 AE Eindhoven (NL)
(72) Inventor: MARINUS, Antonius, A., M., NL-5656 AE Eindhoven (NL); DEIXLER, Peter, NL-5656 AE Eindhoven (NL); GIELEN, Vincent, S., D., NL-5656 AE Eindhoven (NL)
(74) Representative: van Eeuwijk, Alexander Henricus Waltherus
(86) International application number: PCT/IB2009/055479
(87) International publication number: WO 2010/067274

(56) References cited:
- WO-A1-2005/120134
- WO-A1-2008/135927
- US-A1- 2007 070 622
- US-B1- 7 408 304

## Description

### FIELD OF THE INVENTION

This invention relates to a LED light source that is suitable to be supplied by the mains and to a lamp comprising such a LED light source.

### BACKGROUND OF THE INVENTION

A very cheap way of supplying current to a LED string is by connecting the LED string to the output terminals of a rectifier. During operation the input terminals of the rectifier are connected to the mains supply and at the output terminals the rectified mains is present across the LED string so that a current flows through the LED string. US 7,408,304 discloses a bridge rectifer and AC/DC power transformer for connecting to LEDs.

### SUMMARY OF THE INVENTION

In the direct vicinity of the zero crossings of the mains voltage, the voltage across the LED string is too low to cause a current to flow through the LED string. As a consequence the current through the LED string is interrupted with a frequency that equals twice the mains frequency. In steady state operation no flickering is perceived, but illuminating a moving object creates stroboscopic artefacts.

These stroboscopic artefacts can be suppressed to a large extent, in case a LED light source is used that comprises two LED strings and a phase shift is realized between the currents in the first LED string and in the second LED string. Such a phase shift can be realized by connecting each of the LED strings to output terminals of a different rectifier. A first rectifier is for instance connected directly to the mains supply or via components not causing a phase shift and a second rectifier is for instance connected to the mains via a reactive component causing a phase shift such as a capacitive element or an inductive element. Output terminals of the first rectifier are connected to the first LED string and output terminals of the second rectifier are connected to the second LED string. When the current through one of the LED strings is zero, the current through the other LED string is not, due to the phase shift. As a consequence the stroboscopic artefacts are suppressed to a large extent. Preferably, the phase shift between the current through the first LED string and the current through the second LED string is approximately 90 degrees.

It is possible to suppress the stroboscopic artefacts also in case the LED light source comprises three or more LED strings and the current through the subsequent LED strings is shifted approximately 180/n degrees, wherein n is the number of LED strings. In order to realize this phase shift the LED light source must comprise at least a third rectifier and a second reactive element.

The duty cycle of the current through a LED string (i. e. the ratio of the time lapse during which the LED string conducts a current and the duration of half a period of the mains supply) increases when the voltage drop across the LED string is decreased. This can be done by placing part of the LEDs comprised in the LED string in parallel. In case the voltage drop across the LED string supplied by the reactive current is lower than the voltage drop across the other LED string, the phase shift between the currents through the LED strings is increased.

The light source described here-above is very suitable for use in a LED lamp comprising a lamp vessel, electric contacts for connection to a supply source, a heat sink that is at least partly comprised in the lamp vessel, the space surrounded by the lamp vessel being divided into a number of compartments, each of which is at least in part confined by a wall of the lamp vessel and the heat sink. The LEDs comprised in each of the LED strings of the LED light source are connected to the heat sink and are distributed over at least part of the compartments.

In a preferred embodiment, the LED lamp comprises a lamp cap, a lamp bulb connected to the lamp cap and divided into two or more parts, a heat sink present between the parts of the lamp bulb and dividing a space within the lamp into a number of compartments equal to the number of parts of the lamp bulb, wherein the LEDs comprised in each of the LED strings are connected to the heat sink and are evenly distributed over the compartments.

### BRIEF DESCRIPTION OF THE DRAWINGS

Embodiments of the invention will be described in more detail making use of a drawing. In the drawing
Fig. 1 shows an embodiment of a LED light source according to the invention and the distribution of LEDs comprised in the LED strings over compartments of an embodiment of a LED lamp according to the invention;
Fig. 2 shows an embodiment of a LED lamp according to the invention;
Fig. 3-6 shows the distribution of LEDs, comprised in the LED strings of an embodiment of the LED light source according to the invention, over compartments comprised in an embodiment of a LED lamp according to the invention.

### DETAILED DESCRIPTION OF EMBODIMENTS

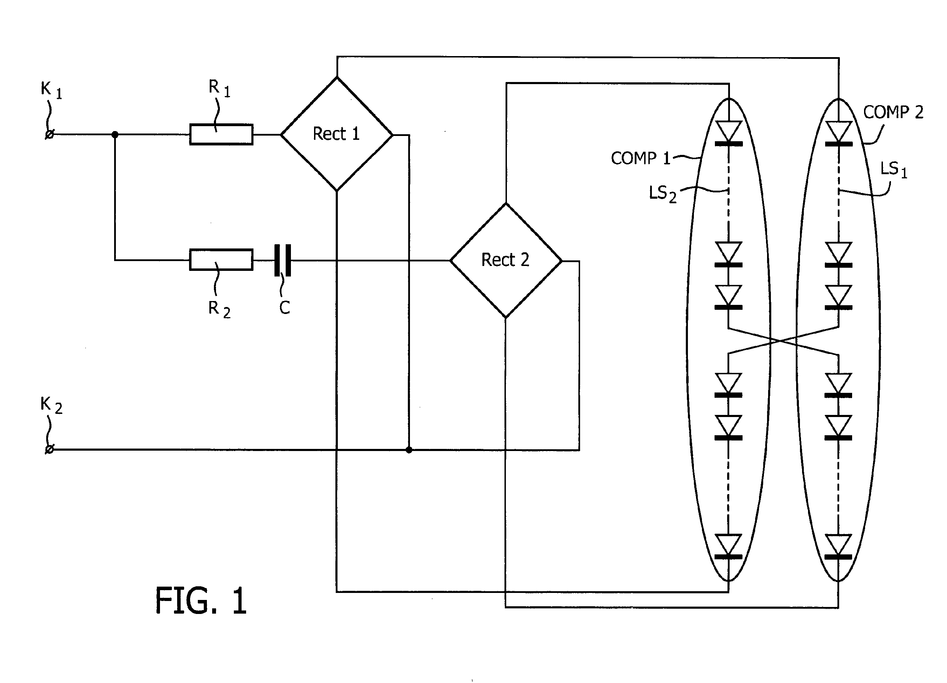

In Fig. 1, K1 and K2 are input terminals for connection to the mains supply. Input terminal K1 is connected via an ohmic resistor R1 to a first input terminal of rectifier bridge Rect1 and also via an ohmic resistor R2 and a capacitor C to a first input terminal of a second rectifier bridge Rect2. The capacitor C forms a reactive element. Input terminal K2 is connected to a second input terminal of the first rectifier bridge Rect1 and to a second input terminal of the second rectifier bridge Rect2. A first output terminal of the first rectifier bridge Rect1 is connected to a first end of LED string LS1. A second end of LED string LS1 is connected to a second output terminal of the first rectifier Rect1. A first output terminal of the second rectifier Rect2 is connected to a first end of a second LED string LS2. A second end of second LED string LS2 is connected to a second output terminal of second rectifier bridge Rect2. In Fig. 1 Comp1 and Comp2 are schematic representations of respectively a first compartment and a second compartment comprised in an embodiment of a LED lamp according to the invention. The LEDs of each of the LED strings LS1 and LS2 are distributed over the first compartment Comp1 and the second compartment Comp2 such that part of the LEDs of each LED string are present in the first compartment Comp1 and the remainder of the LEDs of each LED string is present in the second compartment Comp2.

The operation of the LED light source shown in Fig. 1 is as follows.

When the input terminals K1 and K2 are connected to poles of a mains supply, a first sinusoidally shaped low frequency AC voltage supplied by this mains supply is present at the input terminals of the first rectifier bridge Rect1 and is rectified into a first periodical DC voltage that is present between the output terminals of the first rectifier bridge Rect1 and thus across the first LED string LS1. A second sinusoidally shaped low frequency AC voltage is present at the input terminals of the second rectifier bridge Rect1 and is rectified into a second periodical DC voltage that is present between the output terminals of the second rectifier bridge Rect2 and thus across the second LED string LS2. The second sinusoidally shaped AC voltage is supplied by the mains supply via the capacitor C and is therefore phase shifted with respect to the first sinusoidally shaped AC voltage. As a consequence the second periodical DC voltage is also phase shifted with respect to the first periodical DC voltage. When the momentary amplitude of the first periodical DC voltage is too low to cause a current to flow through the first LED string LS1, due to the phase shift the momentary amplitude of the second periodical DC voltage is high enough to cause a current to flow through the second LED string LS2. As a consequence, at any moment in time one of the LED strings is always carrying a current and thus generating light. Since the LEDs of each LED string are distributed over the compartments Comp1 and Comp2, at any moment in time light is generated in each compartment. For this reason stroboscopic effects are prevented.

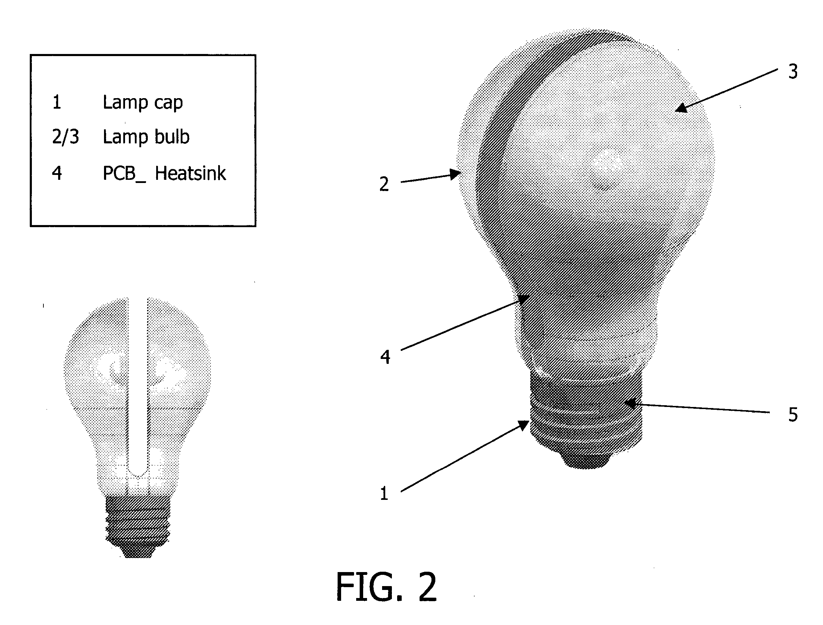

In Fig. 2 a LED lamp is shown that has the shape of an incandescent lamp. The lamp has a lamp cap (1) and a lamp vessel or lamp bulb (2/3) that is divided into two parts 2 and 3. Between the two parts a heat sink 4 is present that divides the space within the lamp bulb into two compartments. The LED lamp comprises a LED light source as shown in Fig. 1. In each of the compartments half of the LEDs that belong to each of the two different LED strings are present on the heat sink. The two different LED strings are connected to the mains supply in the way shown in Fig. 1. Because the first half of the LEDs in each string is present in the first compartment and the other half in the second compartment, the amounts of light generated in each of the compartments are always equal. The two rectifiers, the two resistors and the capacitor are present in the lamp cap.

Of course it is possible to choose a lamp vessel with a shape that differs from that of an incandescent lamp. It is also possible to divide the space within the lamp vessel into three or more compartments that are at least in part confined by the heatsink and the wall of the lamp vessel. The lamp may be equipped with electrical contacts that differ from a lamp cap or lamp fitting. Depending on the practical use of the lamp, it may be desirable that the light output of each compartment comprising LEDs is approximately identical. In this case the LEDs comprised in the two or more LED strings need to be distributed evenly over at least part of the compartments. In some applications it can be desirable that different compartments have different light outputs. This can be realized by unevenly distributing the LEDs comprised in the two or more LED strings over at least part of the compartments.

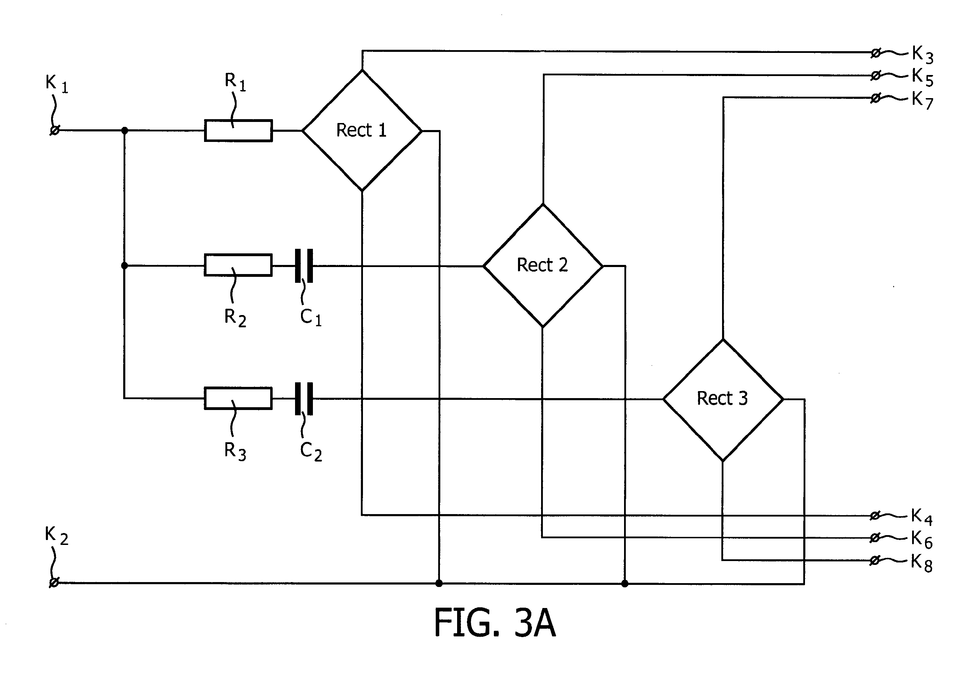

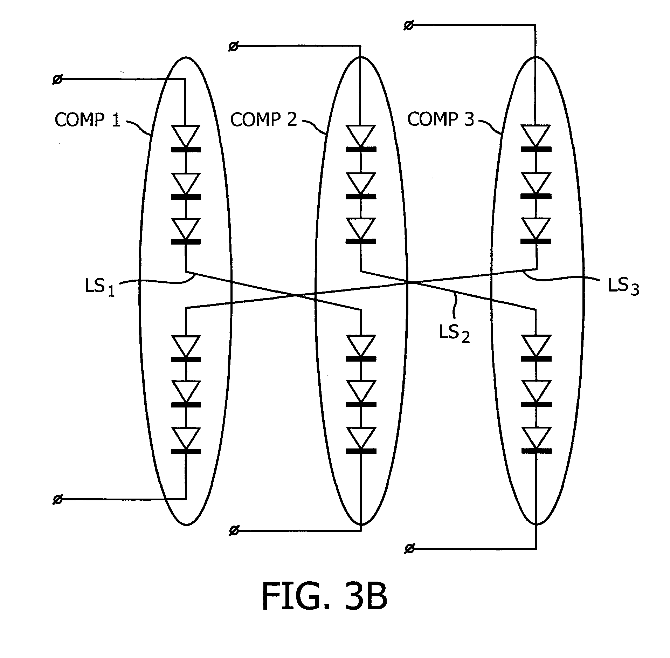

Fig. 3B schematically depicts a distribution of three LED strings over three compartments of a LED lamp. Each of the LED strings is supplied by a periodical DC voltage. These periodical DC voltages are generated by circuitry as shown in Fig. 3A, comprising three rectifiers (Rect1, Rect2 and Rect3) and two reactive elements C1 and C2 in the form of two capacitors. The three periodic DC voltages are present between the output terminals (K3-K8) of the three respective rectifiers. Each of these periodical DC voltages is phase shifted with respect to the two other periodical DC voltages. A first LED string LS1 is connected between output terminals K3 and K4 of rectifier Rect1. A second LED string LS2 is connected between output terminals K5 and K6 of rectifier Rect2. A third LED string LS3 is connected between output terminals K7 and K8 of rectifier Rect3. Each of the LED strings LS1, LS2 and LS3 is distributed over two of the three compartments Comp1, Comp2 and Comp3, since a first part of the LEDs is present in a compartment and the remainder of the LEDs is present in a another compartment. Each compartment comprises the same number of LEDs and therefore has the same light output during operation of the LED lamp. Lamps with three compartments generally have a better omnidirectional distribution of the generated light. Use of three phase shifted currents through three respective LED strings generally offers a light intensity that varies less over time than in case the light is generated by only two LED strings.

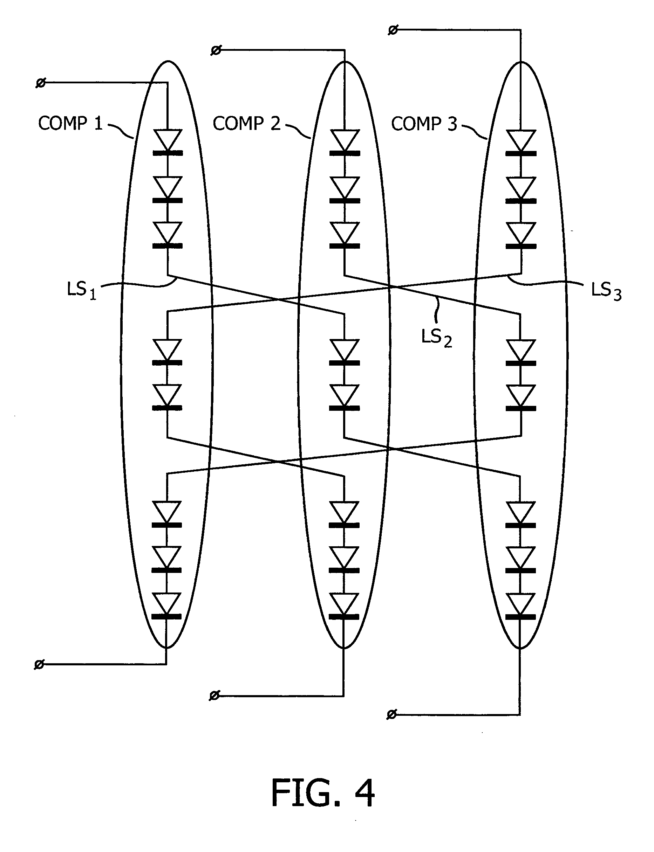

Fig. 4 also schematically depicts a distribution of three LED strings over three compartments of a LED lamp. The LED strings are supplied by circuitry as shown in Fig. 3A. Each of the LED strings is distributed unevenly over the three compartments since each LED string comprises 8 LEDs of which a first three are comprised in a first compartment, a second three in a second compartment and the remaining two in a third compartment. Each of the three compartments comprises the same number of LEDs so that the total number of LEDs comprised in the three LED strings is evenly distibuted over the three compartments.

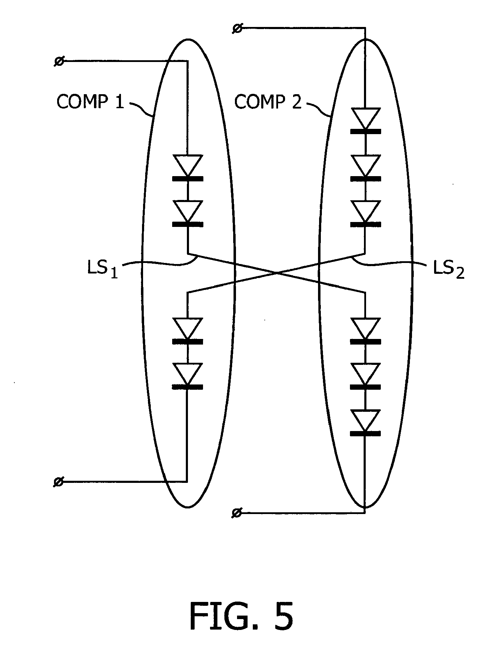

Fig. 5 schematically depicts a distribution of two LED strings over two compartments of a LED lamp. Like in Fig. 1 each LED string is supplied by a periodical DC voltage. The two periodical DC voltages are phase shifted with respect to each other. Of each LED string part of the LEDs is present in a first compartment and the remainder is present in a second compartment. Of the total number of LEDs comprised in the two strings a higher portion is present in the first compartment than in the second compartment. As a consequence, the light output of the first compartment during operation is higher than that of the second compartment. However, since each compartment comprises LEDs belonging to both LED strings, stroboscopic artefacts are suppressed to a large extent. The light generated in the first compartment can for instance be used to lighten a desk while the light generated in the second compartment can be used to lighten the surroundings of the desk.

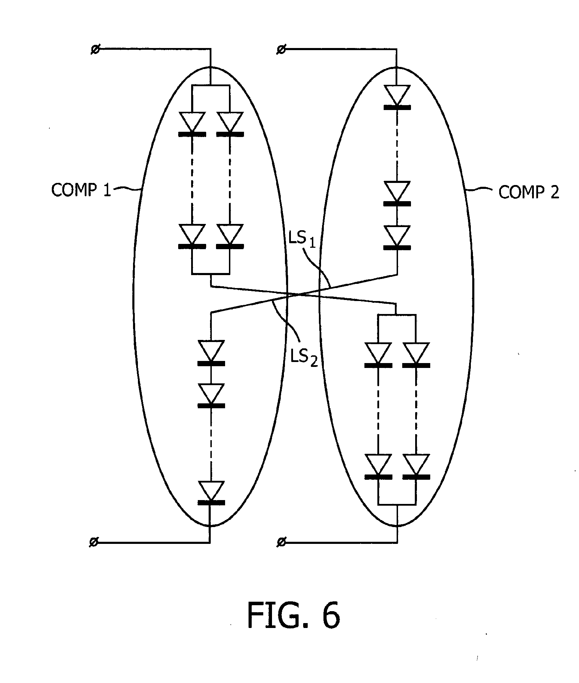

Fig. 6 shows two LED strings distributed over two compartments. The two LED strings are supplied as in Fig. 1 or Fig. 5. At least part of the LEDs comprised in the second string are placed in parallel. In case this second string is connected to the output terminals of the rectifier in Fig. 1 that has a capacitor connected to its input terminal and the other string is connected to output terminals of the other rectifier, the duty cycle of the capacitive current is increased because the voltage drop across the first string is lower than in case all the LEDs are placed in series. As a consequence the voltage across the capacitor is increased and therefore the phase shift between the currents through the two strings is also increased.

## Claims

1. LED light source comprising:
a first rectifier (Rect1) with a first and a second input terminal for connection to an AC supply voltage source and a first and a second output terminal and a first LED-string coupled between the first output terminal and second output terminal,
a second rectifier (Rect2) having a first and a second input terminal and output terminals, said first input terminal of said second rectifier being coupled to the first input terminal of the first rectifier and the second input terminal of the second rectifier being coupled to the second input terminal of the first rectifier, and a second LED string being coupled between the output terminals, and **characterised by**
means (R₁,R₂,C) for causing a phase shift between the voltages that are present during operation at the output terminals of the first rectifier and the output terminals of the second rectifier respectively.

2. LED light source according to claim 1, wherein the means for causing a phase shift comprise a reactive element coupled between the first input terminal of the second rectifier and the first input terminal of the first rectifier.

3. LED light source as claimed in claim 2, comprising at least one further rectifier having a first and a second input terminal and output terminals, said first input terminal of said further rectifier being coupled to the first input terminal of the first rectifier via a further reactive element and the second input terminal of the further rectifier being coupled to the second input terminal of the first rectifier, and a further LED-string being coupled between the output terminals of the further rectifier.

4. LED light source as claimed in claim 1, wherein at least part of the LEDs comprised in the second LED string are connected in parallel.

5. A LED lamp comprising:
a lamp vessel,
electric contacts,
a heat sink at least parly comprised in the lamp vessel,
the space surrounded by the lamp vessel being divided into a number of compartments, each of which is at least in part confined by a wall of the lamp vessel and the heat sink,
a LED light source as claimed in claim 1 or 2,
wherein the LEDS comprised in each of the LED strings are connected to the heat sink and are distributed over at least part of the compartments.

6. A LED lamp as claimed in claim 4, comprising:
a lamp cap,
a lamp bulb connected to the lamp cap and divided into two or more parts,
a heat sink present between the parts of the lamp bulb and dividing a space within the lamp into a number of compartments equal to the number of parts of the lamp bulb,
a LED light source as claimed in claim 1 or 2,
wherein the LEDS comprised in each of the LED strings are connected to the heat sink and are evenly distributed over the compartments.

## Patentansprüche

1. LED-Lichtquelle mit:
einem ersten Gleichrichter (Rect1) mit einer ersten und einer zweiten Eingangsklemme zum Anschluss an eine AC-Versorgungsspannungsquelle und einer ersten und einer zweiten Ausgangsklemme sowie einem zwischen der ersten Ausgangsklemme und der zweiten Ausgangsklemme gekoppelten ersten LED-String,
einem zweiten Gleichrichter (Rect2) mit einer ersten und einer zweiten Eingangsklemme und Ausgangsklemmen, wobei die erste Eingangsklemme des zweiten Gleichrichters mit der ersten Eingangsklemme des ersten Gleichrichters gekoppelt ist und die zweite Eingangsklemme des zweiten Gleichrichters mit der zweiten Eingangsklemme des ersten Gleichrichters gekoppelt ist, sowie einem zwischen den Ausgangsklemmen gekoppelten zweiten LED-String,
**gekennzeichnet durch**
Mittel (R₁, R₂, C), um eine Phasenverschiebung zwischen den Spannungen, die während des Betriebs an den Ausgangsklemmen des ersten Gleichrichters beziehungsweise den Ausgangsklemmen des zweiten Gleichrichters anliegen, zu bewirken.

2. LED-Lichtquelle nach Anspruch 1, wobei die Mittel zum Vorsehen einer Phasenverschiebung ein reaktives Element umfassen, das zwischen der ersten Eingangsklemme des zweiten Gleichrichters und der ersten Eingangsklemme des ersten Gleichrichters gekoppelt ist.

3. LED-Lichtquelle nach Anspruch 2, mit mindestens einem weiteren Gleichrichter mit einer ersten und einer zweiten Eingangsklemme sowie Ausgangsklemmen, wobei die erste Eingangsklemme des weiteren Gleichrichters über ein weiteres reaktives Element mit der ersten Eingangsklemme des ersten Gleichrichters gekoppelt ist und die zweite Eingangsklemme des weiteren Gleichrichters mit der zweiten Eingangsklemme des ersten Gleichrichters gekoppelt ist, sowie einem zwischen den Ausgangsklemmen des weiteren Gleichrichters gekoppelten weiteren LED-String.

4. LED-Lichtquelle nach Anspruch 1, wobei zumindest ein Teil der in dem zweiten LED-String enthaltenen LEDs parallel geschaltet ist.

5. LED-Lampe mit:
einem Lampengefäß,
elektrischen Kontakten,
einem zumindest teilweise in dem Lampengefäß enthaltenen Kühlkörper,
wobei der von dem Lampengefäß umgebene Raum in eine Anzahl von Kammern unterteilt ist, von denen jede zumindest zum Teil durch eine Wand des Lampengefäßes und den Kühlkörper begrenzt ist,
einer LED-Lichtquelle nach Anspruch 1 oder 2,
wobei die in jedem der LED-Strings enthaltenen LEDs mit dem Kühlkörper verbunden und über zumindest einen Teil der Kammern verteilt sind.

6. LED-Lampe nach Anspruch 5, mit:
einem Lampensockel,
einem Lampenkolben, der mit dem Lampensockel verbunden und in zwei oder mehr Teile unterteilt ist,
einem Kühlkörper, der zwischen den Teilen des Lampenkolbens angeordnet ist und einen Raum innerhalb der Lampe in eine Anzahl von Kammern unterteilt, die der Anzahl von Teilen des Lampenkolbens entspricht,
einer LED-Lichtquelle nach Anspruch 1 oder 2,
wobei die in jedem der LED-Strings enthaltenen LEDs mit dem Kühlkörper verbunden und gleichmäßig über die Kammern verteilt sind.

## Revendications

1. Source de lumière à DEL comprenant :
un premier redresseur (Rect1) avec une première borne d'entrée et une deuxième borne d'entrée pour une liaison à une source de tension d'alimentation de courant alternatif, et une première borne de sortie et une deuxième borne de sortie et une première chaîne de DEL couplée entre la première borne de sortie et la deuxième borne de sortie,
un deuxième redresseur (Rect2) ayant une première borne d'entrée et une deuxième borne d'entrée et des bornes de sortie, ladite première borne d'entrée dudit deuxième redresseur étant couplée à la première borne d'entrée du premier redresseur et la deuxième borne d'entrée du deuxième redresseur étant couplée à la deuxième borne d'entrée du premier redresseur, et une deuxième chaîne de DEL étant couplée entre les bornes de sortie, et
**caractérisée par**
un moyen (R₁, R₂, C) pour provoquer un décalage de phase entre les tensions présentes au cours du fonctionnement respectivement aux bornes de sortie du premier redresseur et aux bornes de sortie du deuxième redresseur.

2. Source de lumière à DEL selon la revendication 1, dans laquelle le moyen pour provoquer un décalage de phase comprend un élément réactif couplé entre la première borne d'entrée du deuxième redresseur et la première borne d'entrée du premier redresseur.

3. Source de lumière à DEL selon la revendication 2, comprenant au moins un autre redresseur ayant une première borne d'entrée et une deuxième borne d'entrée et des bornes de sortie, ladite première borne d'entrée dudit autre redresseur étant couplée à la première borne d'entrée du premier redresseur par l'intermédiaire d'un autre élément réactif et la deuxième borne d'entrée de l'autre redresseur étant couplée à la deuxième borne d'entrée du premier redresseur, et une autre chaîne de DEL étant couplée entre les bornes de sortie de l'autre redresseur.

4. Source de lumière à DEL selon la revendication 1, dans laquelle au moins une partie des DEL comprises dans la deuxième chaîne de DEL sont reliées en parallèle.

5. Lampe à DEL comprenant :
un récipient de lampe,
des contacts électriques,
un dissipateur thermique compris au moins partiellement dans le récipient de lampe,
l'espace entouré par le récipient de lampe étant divisé en un nombre de compartiments, chacun d'eux étant au moins partiellement confiné par une paroi du récipient de lampe et le dissipateur thermique,
une source de lumière à DEL selon la revendication 1 ou 2,
dans laquelle les DEL comprises dans chacune des chaînes de DEL sont reliées au dissipateur thermique et sont réparties sur au moins une partie des compartiments.

6. Lampe à DEL selon la revendication 4, comprenant :
un culot de lampe,
une ampoule de lampe reliée au culot de lampe et divisée en deux parties ou plus,
un dissipateur thermique présent entre les parties de l'ampoule de lampe et divisant un espace à l'intérieur de la lampe en un nombre de compartiments égal au nombre de parties de l'ampoule de lampe,
une source de lumière à DEL selon la revendication 1 ou 2,
dans laquelle les DEL comprises dans chacune des chaînes de DEL sont reliées au dissipateur thermique et sont réparties uniformément sur les compartiments.
